# EUROPÄISCHE PATENTSCHRIFT

(11) **EP 0 918 931 B1**
(45) Veröffentlichungstag und Bekanntmachung des Hinweises auf die Patenterteilung: **07.05.2003**
(21) Anmeldenummer: 97934542.8
(22) Anmeldetag: 25.07.1997
(51) Int. Cl.: F04B 17/03, F04B 9/04, F16D 1/04

(54) **ELEKTROMOTOR-/PUMPENAGGREGAT**
ELECTROMOTOR/PUMP ASSEMBLY
GROUPE MOTOPOMPE ELECTRIQUE

(30) Priorität: 17.08.1996 DE 19633169
(43) Veröffentlichungstag der Anmeldung: 02.06.1999
(73) Patentinhaber: Continental Teves AG & Co. oHG, 60488 Frankfurt am Main (DE)
(72) Erfinder: STEFFES, Helmut, D-65795 Hattersheim (DE); DEHIO, Gottfried, D-63450 Hanau (DE)
(74) Vertreter: Portwich, Peter
(86) Internationale Anmeldenummer: EP9704043
(87) Internationale Veröffentlichungsnummer: WO98007985

(56) Entgegenhaltungen:
- EP-A- 0 447 790
- EP-A- 0 621 412
- WO-A-96/19031
- US-A- 3 740 829
- US-A- 5 127 316
- PATENT ABSTRACTS OF JAPAN vol. 018, no. 325 (M-1625), 21.Juni 1994 & JP 06 074144 A (SUMITOMO ELECTRIC IND LTD), 15.März 1994,

## Beschreibung

Die Erfindung bezieht sich auf ein Elektromotor-/Pumpenaggregat mit mindestens einem Lager zur Lagerung einer Motorwelle in einem Motorengehäuse sowie mit einer an dem Motor befestigbaren Pumpe, welche mindestens ein Lager zur Lagerung einer Pumpenwelle in einem Pumpengehäuse aufweist, wobei die beiden Wellen mit Hilfe eines Übertragungselementes miteinander verbunden sind.

Ein Motor-/Pumpenaggregat ist bereits aus der DE-OS 32 32 083 bekannt. Der Drehmomentenübertragung vom Elektromotor auf das Pumpenaggregat dient ein an ein Pumpenwellenende angeformter Zapfen, welcher in eine, am Motorwellenende vorgesehene Nut eingreift. Mit dieser Anordnung wird zwar das auftretende Drehmoment zuverlässig übertragen, aber die Montage dieses Aggregates ist aufwendig, weil Motor und Pumpe nur bei einer bestimmten Positon der Wellen zueinander montiert werden können. Folglich ist es notwendig, die Montageposition genau einzuhalten und Positionsüberwachungen vorzunehmen. Fertigungstoleranzen und zur Montageerleichterung vorgesehenes Spiel führen hier zu einer gewissen Erleichterung. Es hat sich jedoch gezeigt, daß Spiel zwischen den Wellen, sowohl in radialer wie auch in axialer Richtung, im Betrieb zu unerwünschter Geräuschentwicklung führt.

Aus der US-A-5 127 316 ist ein gattungsgemäßes Elektromotor-/Pumpenaggregat bekannt, bei dem die Motorwelle und die Pumpenwelle mit Hilfe eines dichtungsartigen Übertragungselementes miteinander verbunden werden können. Das an der Pumpenwelle ausgebildete, geringfügig elastische Übertragungselement weist eine Öffnung auf, in die ein Zapfen der Motorwelle eingreift, so daß die Übertragung des Drehmomentes der Motorwelle auf die Pumpenwelle mittels Formschluß erfolgt.

Aufgabe der vorliegenden Erfindung ist es, ein Elektromotor-/Pumpenaggregat bereitzustellen, welches bei einfacher Montage eine möglichst geringe Geräuschentwicklung im Betrieb aufweist. Gleichzeitig soll die Kupplung zwischen den beiden Wellen vereinfacht werden.

Diese Aufgabe wird bei einem gattungsgemäßen Elektromotor-/Pumpenaggregat dadurch gelöst, daß das Übertragungselement kraftschlüssig wirksam ist und federnde Abschnitte aufweist, die die Wellen gegeneinander verspannen.

In besonders vorteilhafter Weise gleicht das kraftschlüssig wirksame Übertragungselement ferner auch Fluchtungs- und Winkelabweichungen der beiden Wellen zueinander aus, ohne daß es zu unerwünschter Geräuschentwicklung kommt.

Weiterbildungen der Erfindung gegen aus Unteransprüchen, der Beschreibung und der Zeichnung hervor.

Die Erfindung wird nachstehend anhand von Ausführungsbeispielen, welche in der Zeichnung dargestellt sind, näher beschrieben. Es zeigen:
- Fig. 1: prinzipieller Schnitt durch ein erstes Ausführungsbeispiel eines Motor-Pumpenaggregates;
- Fig. 2: ein zweites Ausführungsbeispiel in einer Darstellung wie in Fig. 1.

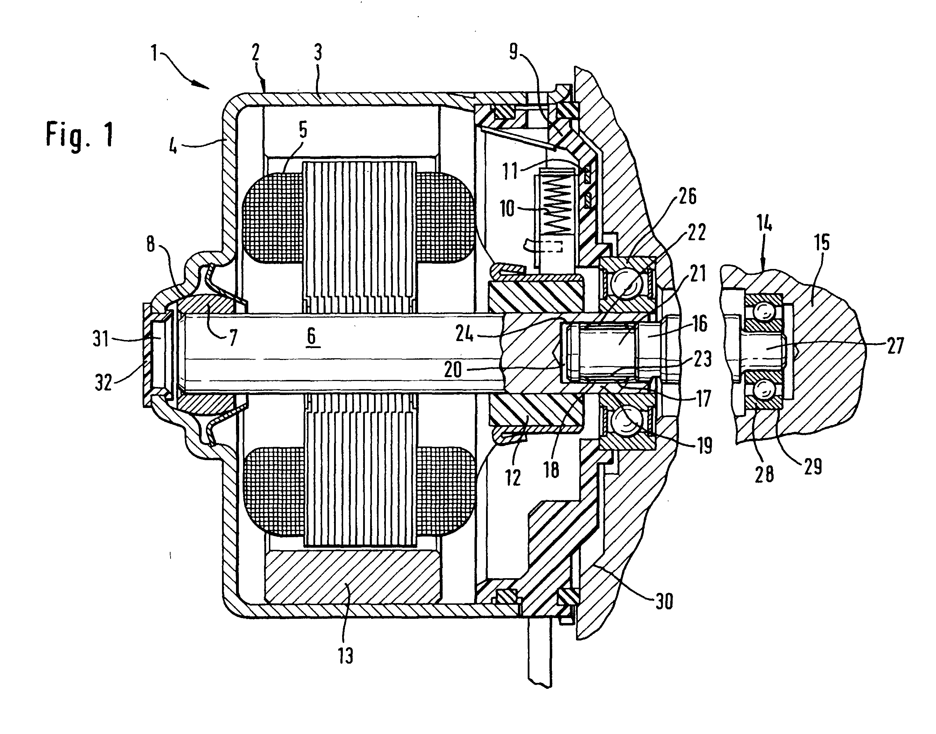

Ein Elektromotor-/Pumpenaggregat 1 gemäß Fig. 1 umfaßt einen Elektromotor 2 mit einem zylindrischen Motorengehäuse 3, welches einen Boden 4 aufweist und pumpenseitig offen ist. Der Elektromotor 2 umfaßt darüber hinaus eine mit einem Rotor 5 versehene Motorwelle 6, welche bodenseitig mit einem Lager 7 an einem napfförmigen Lagersitz 8 gelagert ist.

Pumpenseitig ist das Motorengehäuse 3 mit Hilfe eines Lagerschildes 9 verschlossen. Das Lagerschild 9 ist in die offene Seite des Motorengehäuses 3 eingesteckt und befestigt. Das Lagerschild 9 dient ferner als Tragplatte für Bürsten 10, wobei gegebenenfalls Zuleitungen 11 zu den Bürsten 10 in dem aus Kunststoff hergestellten Lagerschild 9 eingebettet sind. Der Elektromotor 2 verfügt ferner über grundsätzlich bekannte Bauteile wie beispielsweise Kommutator 12 und Magnete 13, deren Anordnung und Wirkungsweise bekannt sind und nicht weiter beschrieben werden müssen.

Lagerschildseitig ist eine Pumpe 14, vorzugsweise einer Kolbenpumpe, mit einem Pumpengehäuse 15 und einer Pumpenwelle 16 an dem Elektromotor 2 befestigt. Die Pumpe weist an ihrer Welle 16 einen Exzenter auf, welcher infolge Wellenrotation Kolben betätigt. Es ist darauf hinzuweisen, daß die separate Anordnung des Exzenters an der Pumpenwelle und nicht an der Motorwelle zu einer vereinfachten Motorenfertigung führt, insbesondere wenn es sich um kleine Exzentrizitäten handelt.

Die beiden Wellen 6, 16 sind mit Hilfe eines kraftschlüssig wirksamen Übertragungselementes 17 miteinander verbunden. Das Übertragungselement 17 weist Hülsenform auf und verfügt über federnde Abschnitte 18, welche die beiden Wellen 6,16 gegeneinander verspannen. Diese Anordnung sorgt für eine drehfeste Verbindung zwischen Motorwelle 6 und Pumpenwelle 16. Die Wellen 6, 16 führen im Betrieb keinerlei Relativbewegung zueinander aus. Wie Fig. 1 zeigt, ist das pumpenseitige Wellenende 19 der Motorwelle 6 mit einem Sackloch 20 versehen, in das die Pumpenwelle 16 mit einem Wellenende 21 zusammen mit dem Übertragungselement 17 eingesteckt ist. Das Übertragungselement 17 versperrt hierbei einen Zwischenraum 22 zwischen einer Mantelfläche 23 des Wellenendes 21 und der Innenfläche 24 des Sacklochs 20, so daß nach der Montage des Aggregates kein radiales Spiel zwischen den beiden Wellen vorliegt. Das Übertragungselement 17 sichert die beiden Wellen 6, 16 infolge Kraftschluß aber auch axial zueinander. Infolgedessen kann das Lager 7 im Motor als Loslager und das Lager 26 als Festlager ausgebildet sein.

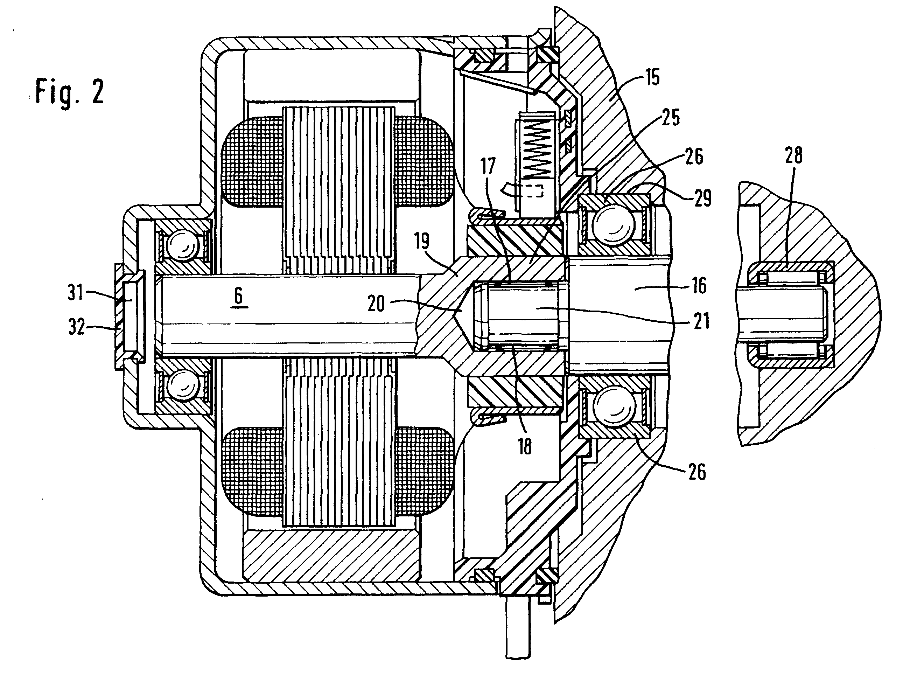

Ein Ausführungsbeispiel gemäß Fig. 2 weist grundsätzlich gleiche Merkmale auf wie in Fig. 1 beschrieben. Es ist hierbei jedoch die Motorwelle 6 im Bereich des Wellenendes 19 mit einer Querschnittsaufweitung 25 und einem mittigen Sackloch 20 versehen, welches dazu dient, die Pumpenwelle 16 mit einem Wellenende 21 aufzunehmen. Im Unterschied zu Fig. 1 ist ferner die Pumpenwelle 16 im Bereich der Wellenenden 19,21 durch ein zusätzliches Lager 26 gelagert. Das Lager 26 ist am Pumpengehäuse 15 abgestützt und es versteht sich, daß das Lager 26, wie in Fig. 1 dargestellt, grundsätzlich auch dazu dienen kann, die Motorwelle 6 abzustützen. Schließlich ist als Wälzlager 28ein Nadellager vorgesehen, welches besonders wenig Platzbedarf hat.

Wie gesagt gewährleistet das Übertragungselement 17 die Drehmomentenübertragung und kann ferner auch zusätzliche radiale Lasten aufnehmen. Es ist kraftschlüssig wirksam und gleicht die Toleranzen zwischen den beiden Wellen 6,16 aus, so daß auch Fluchtungs- und Winkelabweichungen der beiden Wellen 6,16 kompensiert werden können. Der Rundlauf der beiden Wellen 6,16 zueinander wird insbesondere dadurch verbessert, daß die beiden Wellen 6,16 ineinandergesteckt sind und mit Hilfe des Lagers 26 gelagert sind. Folglich ist entweder die Motorwelle 2fach gelagert, wie in Fig. 1 dargestellt, oder die Pumpenwelle 2fach gelagert, wie in Fig. 2 dargestellt. In beiden Fällen ist die Pumpenwelle 16 an ihrem, dem Elektromotor 2 abgewandten Ende 27 mit einem Wälzlager 28, gegebenenfalls einem Nadellager in dem Pumpengehäuse 15 angeordnet. Für das Lager 26, wie auch für das Wälzlager 28 weist das Pumpengehäuse 15 entsprechende Lagersitze 29 auf.

Zur Montage des Elektromotor-/Pumpenaggregates werden die beiden Wellen 6,16 aufeinandergesteckt, wobei das Lagerschild 9 des Elektromotors 2 zumindest teilweise in eine angepaßte Vertiefung 30 des Pumpengehäuses 5 eintaucht. Zur weiteren Vereinfachung der Montage ist an dem domförmigen Lagersitz 8 am Boden 4 des Motorengehäuses 3 eine Ausnehmung 31 vorgesehen, welche dazu dient, die notwendige Montagekraft mit Hilfe eines Montagewerkzeuges auf die Motorwelle 6 aufzubringen. Nach erfolgter Montage des Aggregates wird die Ausnehmung 31 mit Hilfe eines Stopfens 32 verschlossen. Es ist schließlich möglich, die beiden Wellen 6, 16 zusätzlich noch mit einem formschlüssigen Übertragungselement, beispielsweise einem Stift oder Bolzen zu sichern. Dies erfolgt dadurch, daß der Stift durch entsprechende Querbohrungen in den Wellenenden 19, 21 gesteckt wird.

## Patentansprüche

1. Elektromotor-/Pumpenaggregat mit mindestens einem Lager (7) zur Lagerung einer Motorwelle (6) in einem Motorengehäuse (3) sowie mit einer an dem Elektromotor (2) befestigbaren Pumpe (14), welche mindestens ein Wälzlager (28) zur Lagerung einer Pumpenwelle (16) in einem Pumpengehäuse (15) aufweist, wobei die beiden Wellen (6,16) mit Hilfe eines Übertragungselementes (17) miteinander verbunden sind, **dadurch gekennzeichnet, daß** das Übertragungselement (17) kraftschlüssig wirksam ist und federnde Abschnitte (18) aufweist, die die Wellen (6, 16) gegeneinander verspannen.

2. Elektromotor-/Pumpenaggregat nach einem oder mehreren der vorhergehenden Ansprüche, **dadurch gekennzeichnet, daß** die Motorwelle (6) und die Pumpenwelle (16) mit dem Übertragungselement (17) spielfrei verbunden sind.

3. Elektromotor-/Pumpenaggregat nach Anspruch 1, **dadurch gekennzeichnet, daß** das Übertragungselement (17) an einem Wellenende (21) der Pumpenwelle (16) angeordnet ist und in ein Sackloch (20) der Motorwelle (6) einsteckbar ist.

4. Elektromotor-/Pumpenaggregat nach einem oder mehreren der vorhergehenden Ansprüche, **dadurch gekennzeichnet, daß** das Übertragungselement (17) an einem Wellenende (19) der Motorwelle (6) angeordnet ist und in ein Sackloch (20) der Pumpenwelle (16) einsteckbar ist.

5. Elektromotor-/Pumpenaggregat nach einem oder mehreren der vorgehenden Ansprüche, **dadurch gekennzeichnet, daß** die Wellen (6,16) mit Hilfe eines zusätzlichen, formschlüssig wirksamen Übertragungselementes miteinander verbindbar sind.

6. Elektromotor-/Pumpenaggregat nach einem oder mehreren der vorhergehenden Ansprüche, **dadurch gekennzeichnet, daß** im Bereich der Wellenenden (19,21) ein zusätzliches Lager (26) vorgesehen ist, welches die Motorwelle (6) oder die Pumpenwelle (16) lagert.

7. Elektromotor-/Pumpenaggregat nach einem oder mehreren der vorhergehenden Ansprüche, **dadurch gekennzeichnet, daß** die Motorwelle (6) im Bereich des Wellenendes (19) eine Querschnittsaufweitung (25) und ein mittiges Sackloch (20) zur Aufnahme der Pumpenwelle (16) aufweist.

8. Elektromotor-/Pumpenaggregat nach einem oder mehreren der vorhergehenden Ansprüche, **dadurch gekennzeichnet, daß** das Motorgehäuse (3) eine mit der Motorwelle (6) fluchtende Ausnehmung (31) aufweist.

## Claims

1. Electric motor/pump assembly including at least one bearing (7) for the mounting support of a motor shaft (6) in a motor housing (3), and a pump (14) which is adapted to be attached to the electric motor (2) and has at least one roller bearing (28) for the mounting support of a pump shaft (16) in a pump housing (15), wherein the two shafts (6, 16) are interconnected by way of a transmission element (17),
**characterized in that** the transmission element (17) is operatively connected and has resilient portions (18) which clamp the shafts (6, 16) in relation to one another.

2. Electric motor/pump assembly as claimed in any one or more of the preceding claims,
**characterized in that** the motor shaft (6) and the pump shaft (16) are connected to the transmission element (17) without a clearance.

3. Electric motor/pump assembly as claimed in claim 1,
**characterized in that** the transmission element (17) is arranged on a shaft end (21) of the pump shaft (16) and adapted to be inserted into a blind-end bore (20) of the motor shaft (6).

4. Electric motor/pump assembly as claimed in any one or more of the preceding claims,
**characterized in that** the transmission element (17) is arranged on a shaft end (19) of the motor shaft (6) and adapted to be inserted into a blind-end bore (20) of the pump shaft (16).

5. Electric motor/pump assembly as claimed in any one or more of the preceding claims,
**characterized in that** the shafts (6, 16) are adapted to be interconnected by way of an additional, operatively connected transmission element.

6. Electric motor/pump assembly as claimed in any one or more of the preceding claims,
**characterized in that** proximate the shaft ends (19, 21), an additional bearing (26) is provided as a mounting support for the motor shaft (6) or the pump shaft (16).

7. Electric motor/pump assembly as claimed in any one or more of the preceding claims,
**characterized in that** the motor shaft (6), proximate the shaft end (19), includes a cross-sectional expansion (25) and a central blind-end bore (20) to accommodate the pump shaft (16).

8. Electric motor/pump assembly as claimed in any one or more of the preceding claims,
**characterized in that** the motor housing (3) has a recess (31) which is in alignment with the motor shaft (6).

## Revendications

1. Groupe motopompe électrique comportant au moins un palier (7) pour supporter un arbre moteur (6) dans un carter moteur (3), ainsi qu'une pompe (14) pouvant être fixée au moteur électrique (2) et qui comporte au moins un palier de roulement (28) pour supporter un arbre (16) de la pompe dans un carter (15) de la pompe, les deux arbres (6, 16) étant reliés entre eux à l'aide d'un élément de transmission (17), **caractérisé en ce que** l'élément de transmission (17) opère par liaison en force et comporte des parties élastiques (18) qui serrent les arbres (6, 16) l'un contre l'autre.

2. Groupe motopompe électrique selon la revendication précédente, **caractérisé en ce que** l'arbre moteur (6) et l'arbre (16) de la pompe sont reliés sans jeu à l'élément de transmission (17).

3. Groupe motopompe électrique selon la revendication 1, **caractérisé en ce que** l'élément de transmission (17) est disposé sur une extrémité (21) de l'arbre (16) de la pompe et peut être emboîté dans un trou borgne (20) de l'arbre moteur (6).

4. Groupe motopompe électrique selon une ou plusieurs des revendications précédentes, **caractérisé en ce que** l'élément de transmission (17) est disposé sur une extrémité (19) de l'arbre moteur (6) et peut être emboîté dans un trou borgne (20) de l'arbre (16) de la pompe.

5. Groupe motopompe électrique selon une ou plusieurs des revendications précédentes, **caractérisé en ce que** les arbres (6, 16) peuvent être reliés entre eux à l'aide d'un élément de transmission supplémentaire opérant par complémentarité de forme.

6. Groupe motopompe électrique selon une ou plusieurs des revendications précédentes, **caractérisé en ce que** dans la zone des extrémités (19, 21) des arbres est prévu un palier (26) supplémentaire qui supporte l'arbre moteur (6) ou l'arbre (16) de la pompe.

7. Groupe motopompe électrique selon une ou plusieurs des revendications précédentes, **caractérisé en ce que** l'arbre moteur (6) présente, dans la zone de son extrémité (19), un élargissement (25) de sa section transversale et un trou borgne (20) central pour recevoir l'arbre (16) de la pompe.

8. Groupe motopompe électrique selon une ou plusieurs des revendications précédentes, **caractérisé en ce que** le carter moteur (3) comporte un évidement (31) aligné avec l'arbre moteur (6).
